# EUROPEAN PATENT SPECIFICATION

(11) **EP 2 457 682 B1**
(45) Date of publication and mention of the grant of the patent: **15.06.2016**
(21) Application number: 11008788.9
(22) Date of filing: 04.11.2011
(51) Int. Cl.: B23K 9/173, B23K 9/29, B23K 9/12

(54) **Welding torch and welding robot**
Schweißbrenner und Schweißroboter
Chalumeau de soudage et robot de soudage

(30) Priority: 24.11.2010 JP 2010261479
(43) Date of publication of application: 30.05.2012
(73) Proprietor: Kabushiki Kaisha Kobe Seiko Sho (Kobe Steel, Ltd.), Kobe-Shi, Hyogo 651-8585 (JP)
(72) Inventor: Izutani, Shun, Fujisawa-shi Kanagawa 251-0014 (JP); Suzuki, Reiichi, Fujisawa-shi Kanagawa 251-0014 (JP)
(74) Representative: Müller-Boré & Partner Patentanwälte PartG mbB

(56) References cited:
- WO-A1-03/095134
- JP-A- 2005 144 548

## Description

### BACKGROUND OF THE INVENTION

### 1. Field of the Invention

The present invention relates to a welding torch, a welding tip, and a welding robot that are used for gas-shielded arc welding.

### 2. Description of the Related Art

In general, a contact tip (hereinafter referred to as a welding tip) is used for gas-shielded arc welding. A welding tip is a consumable copper electrode, and an electric current is supplied to a welding wire through the welding tip. A through hole is formed in the welding tip, and the welding wire is continuously fed into the through hole while an electric current is being supplied to the welding wire through the welding tip, and thereby an arc is generated between a base material and the welding wire that protrudes from the distal end of the welding tip.

When gas-shielded arc welding is performed, the inner peripheral surface of the through hole in the distal end of the welding tip is abraded by the welding wire. As a result, the inner diameter of the through hole is increased, so that the welding position may be displaced or poor electrical connection to the welding wire may occur. Therefore, it is necessary to replace the welding tip periodically.

Existing welding tips have an external thread formed on a proximal end portion, and such a welding tip is used by screwing the welding tip into a connection portion of a welding torch body, which is internally threaded. However, it is inconvenient to attach and remove a welding tip having a screw mechanism. Moreover, if the thread is stripped, it is impossible to attach and remove the welding tip. In particular, to perform gas-shielded arc welding under a high current condition, it is necessary to replace the welding tip frequently. In such a case, the welding efficiency is negatively affected by the time required to remove and attach the welding tip.

Moreover, if tip fusion occurs, it is very difficult to remove a welding tip having a screw mechanism, because it is necessary to twist and cut off the wire. Here, the term "tip fusion" refers to a problem that occurs when a welding wire has become fused with an inner peripheral surface at the distal end of the welding tip and that causes a failure in feeding of the welding wire.

In addition, a screw mechanism is not suitable for automating the operation of attaching and removing the welding tip, because it is necessary to rotate the welding tip. In particular, a technology that automates the operation of attaching and removing a welding tip and that solves the problem of tip fusion has not been realized to date.

To solve the problems described above, technologies for connecting a welding tip to a welding torch that do not use a screw mechanism have been developed.

WO 03/095134 A1 (D1) refers to a welding contact tip and diffuser assembly for use in a welding apparatus. The assembly includes an electrically conductive contact tip having a tapered exterior surface, a diffuser having a cavity with a tapered interior surface, and a releasable connection for holding the contact tip in the diffuser. The connection includes at least one detent element in either the diffuser or the contact tip, at least one recess forming a ramp in the other of the diffuser or contact tip, and at least one spring. The spring biases the detent element into the recess and against the ramp to generate an axial force against the ramp. The axial force tends to force the tapered surfaces of the contact tip and diffuser into contact with one another.

JP 2005 144548 A refers to a welding torch comprising a welding tip holder comprising a plurality of slits and a contact chip, the outer circumference of which is tightened by a spring or the like. The contact chip comprises a screw to open and close the contact chip. When the contact chip is closed the welding tip is positively tied to the welding torch.

For example, Japanese Unexamined Patent Application Publication No. 2005-144548 describes a mechanism in which a welding tip is inserted into a welding torch body having a plurality of slits and the welding torch body is fastened from the outside by using an O-ring or a spring.

Japanese Unexamined Utility Model Registration Application Publication No. 60-38673 describes a mechanism in which a welding tip is fitted into a welding torch body and the welding tip is pressed and fixed in place by using a threaded bar.

However, in the mechanism described in Japanese Unexamined Patent Application Publication No. 2005-144548, the welding tip is only inserted into the welding torch body having the slits. Therefore, a fastening force applied by the welding torch body to the welding tip may decrease due to repeated attachment and removal of welding tips or due to heat of an arc. As a result, the fastening force applied to the welding tip may become insufficient, so that the welding tip may become detached. Moreover, if tip fusion occurs, it is necessary to pull out the welding tip with a very strong force. Therefore, the problem of tip fusion is not solved.

In the mechanism described in Japanese Unexamined Utility Model Registration Application Publication No. 60-38673, the welding torch body and the welding tip are not directly connected to each other by using a screw. However, the threaded bar is screwed into and fixed to the welding torch body. Therefore, to attach and remove the welding tip, it is necessary to rotate the threaded bar, so that the operation of attaching and removing the welding tip is not sufficiently simplified. Moreover, the threads of the threaded bar may become stripped, because components of the welding torch are usually made of copper, which has high conductivity but relatively low rigidity. If this occurs, it is possible that the welding tip will not be able to be appropriately fixed in place.

In addition, with the technology described in Japanese Unexamined Patent Application Publication No. 2005-144548, it is very difficult to control a force when attaching and removing a welding tip, and it is also necessary to remove an O-ring, a spring, and the like. With the technology described in Japanese Unexamined Utility Model Registration Application Publication No. 60-38673, it is necessary to rotate the threaded bar when attaching and removing the welding tip, which is a complicated operation. Consequently, these technologies are not suitable for automating the operation of attaching and removing a welding tip.

### SUMMARY OF THE INVENTION

An object of the present invention is to provide a welding torch, a welding tip, and a welding robot that can simplify the operation of attaching and removing a welding tip, that can solve the problem of tip fusion, and that is suitable for automating the operation of attaching and removing a welding tip.
The invention relates to welding torches having the features of claims 1 and 7, respectively. Preferred embodiments are subject-matters of the dependent claims.

According to a first aspect of the present invention, a welding torch includes a tip connection body that has a cylindrical shape and that has a fixing hole extending through a side surface thereof; a holding member that has a cylindrical shape and that is fitted onto an outside of the tip connection body, the holding member having a smaller diameter portion and a larger diameter portion formed on an inner peripheral surface thereof; a fixing member disposed between the inner peripheral surface of the holding member and the fixing hole of the tip connection body, the fixing member being fixed in place in an axial direction of the tip connection body; and a welding tip that has a cylindrical shape and that is fitted into the tip connection body, the welding tip having a fixing groove formed along a circumferential direction of an outer peripheral surface thereof at a position that is opposite the fixing hole. The holding member is displaceable in the axial direction of the tip connection body. The fixing member fixes the welding tip in place in the axial direction of the welding tip when the fixing member is in contact with the smaller diameter portion, and the fixing member releases the welding tip when the fixing member is in contact with the larger diameter portion.

In the welding torch, the holding member is displaceable in the axial direction of the tip connection body. Therefore, by only displacing the holding member in the axial direction of the tip connection body, the inner peripheral surface of the fixing member that the holding member contacts can be changed from the inner peripheral surface of the smaller diameter portion to the inner peripheral surface of the larger diameter portion or from the inner peripheral surface of the larger diameter portion to the inner peripheral surface of the smaller diameter portion. That is, the state of the welding tip can be changed between a fixed state and a released state by only displacing the holding member in the axial direction of the tip connection body. Thus, with the welding torch according to the aspect of the present invention, the welding tip can be attached and removed by performing a single operation of displacing the holding member in the axial direction of the tip connection body.

The welding torch may further include an elastic member disposed between the holding member and the tip connection body, one end of the elastic member being in contact with the smaller diameter portion and the other end of the elastic member being in contact with the tip connection body; and the width of the fixing member in a radial direction of the tip connection body may be larger than a distance between an inner peripheral surface of the smaller diameter portion and an outer peripheral surface of the welding tip and may be smaller than a distance between an inner peripheral surface of the larger diameter portion and the outer peripheral surface of the welding tip.

In this case, the width of the fixing member in the radial direction of the tip connection body is larger than the distance between the inner peripheral surface of the smaller diameter portion of the holding member and the outer peripheral surface of the welding tip. With such a structure, when one end of the fixing member is in contact with the inner peripheral surface of the smaller diameter portion of the holding member, the other end of the fixing member passes through the fixing hole of the tip connection body and is fitted into the fixing groove of the welding tip (hereinafter referred to as "fixed state" as appropriate). As a result, the welding tip can be fixed in place in the axial direction relative to the tip connection body.

Moreover, the width of the fixing member in the radial direction of the tip connection body is smaller than the distance between the inner peripheral surface of the larger diameter portion of the holding member and the outer peripheral surface of the welding tip. With such a structure, when one end of the fixing member is in contact with the inner peripheral surface of the larger diameter portion of the holding member, the other end of the fixing member is not fitted into the fixing groove of the welding tip (hereinafter referred to as "released state"). As a result, the welding tip can be removed from the tip connection body in the axial direction of the welding tip.

In addition, the holding member is displaceable in the axial direction of the tip connection body. Therefore, by only displacing the holding member in the axial direction of the tip connection body, the inner peripheral surface of the fixing member that the holding member contacts can be changed from the inner peripheral surface of the smaller diameter portion to the inner peripheral surface of the larger diameter portion or from the inner peripheral surface of the larger diameter portion to the inner peripheral surface of the smaller diameter portion. That is, the state of the welding tip can be changed between the fixed state and the released state by only displacing the holding member in the axial direction of the tip connection body. Thus, with the welding torch according to the aspect of the present invention, the welding tip can be attached and removed by performing a single operation of displacing the holding member in the axial direction of the tip connection body.

It is preferable that, in the welding torch, the width of the fixing member in the radial direction of the tip connection body be smaller than a distance between the inner peripheral surface of the smaller diameter portion and a bottom surface of the fixing groove, and the welding tip be rotatable around the axial direction thereof.

In this case, the width of the fixing member in the radial direction of the tip connection body is smaller than the distance between the inner peripheral surface of the smaller diameter portion of the holding member and the bottom surface of the fixing groove. With such a structure, when one end of the fixing member is in contact with the inner peripheral surface of the smaller diameter portion of the holding member, the other end of the fixing member does not apply a pressure to the bottom surface of the fixing groove of the welding tip. As a result, the welding tip is rotatable around the axial direction thereof.

It is preferable that, in the welding torch, a contact surface of the fixing member that contacts the fixing groove be a curved surface.

In this case, the welding tip can be easily rotated when the welding tip is in the fixed state, because the surface of the fixing member that is in contact with the fixing groove has a curved surface. Therefore, even when the welding tip is in the fixed state, the welding tip can be easily rotated around the axial direction thereof.

It is preferable that the welding torch further include a shield member that has an annular shape and that is mounted on an outer peripheral surface of a distal end portion of the tip connection body, the shield member extending beyond the inner peripheral surface of the larger diameter portion of the holding member in a radial direction of the tip connection body.

In this case, foreign matters such as spatter can be prevented from entering a gap between the tip connection body and the holding member, because the shield member is mounted on the outer peripheral surface of the distal end portion of the tip connection body.

It is preferable that, in the welding torch, a plurality of the fixing holes be formed in the side surface of the tip connection body along the circumferential direction, and the fixing member be disposed at each of positions that are opposite the fixing holes.

In this case, the welding tip can be fixed in place in the axial direction of the welding tip relative to the tip connection body by the plurality of fixing members.

According to a second aspect of the present invention, a welding torch includes a tip connection body that has a cylindrical shape and that has a fixing hole extending through a side surface thereof; a holding member that has a cylindrical shape and that is fitted onto an outside of the tip connection body, the holding member having an inner peripheral surface having a variable diameter; a fixing member disposed between the inner peripheral surface of the holding member and the fixing hole of the tip connection body, the fixing member being fixed in place in an axial direction of the tip connection body; and a welding tip that has a cylindrical shape and that is fitted into the tip connection body, the welding tip having a fixing groove formed along a circumferential direction of an outer peripheral surface thereof at a position that is opposite the fixing hole. The holding member is displaceable in the axial direction of the tip connection body. The fixing member fixes the welding tip in place in the axial direction of the welding tip when the fixing member is in contact with the inner surface of the holding member in a reduced diameter state, and the fixing member releases the welding tip when the holding member has an increased diameter.

The welding torch according to the present invention, may include a welding tip which has a cylindrical
shape and has one or more fixing grooves formed along the circumferential direction of the outer peripheral surface thereof.

Because the welding tip has the fixing groove formed along the circumferential direction of the outer peripheral surface, the welding tip can be fixed in place in the axial direction by fitting the fixing member into the fixing groove.

A welding robot according to the present invention includes the welding torch.

Because the welding robot includes the welding torch, the welding robot has the same advantage as that of the welding torch.

Because the welding torch according to the present invention includes the holding member and the fixing member, which have predetermined shapes, the welding tip can be attached to and removed from the welding torch by performing a single operation of displacing the holding member in the axial direction of the tip connection body. Therefore, the welding torch according to the present invention can simplify the operation of attaching and removing the welding tip. In addition, the welding torch can be easily applied to an automatic mechanism such as a tip changer, so that the operation of attaching and removing the welding tip can be automated.

With the welding torch according to the present invention, even if the welding tip has become fused with the welding wire, the problem can be solved by releasing the fixed state of the welding tip, by removing the welding tip and welding wire in the axial direction of the tip connection body by performing a wire inching operation, and by cutting the welding wire. Therefore, with the welding torch according to the present invention, the problem of "tip fusion" can be easily solved.

Moreover, with the welding torch according to the present invention, the relationship between the width of the fixing member and the distances between the outer peripheral surfaces and the inner peripheral surfaces of the components of the welding torch are appropriately defined, so that the welding tip is rotatable around the axial direction thereof. Therefore, by rotating the winding tip of the welding torch according to the present invention during welding, positions of the welding tip and the welding wire at which abrasion occurs can be changed as appropriate. As a result, abrasion does not occur at one position but occurs at a plurality of positions, so that the time before a problem such as displacement of the welding position, poor electrical connection to the welding wire, or tip fusion occurs can be delayed, and the life of the welding tip can be increased.

In addition, in the welding torch according to the present invention, the contact surface of the welding torch, which is in contact with the fixing groove of the fixing member, is a curved surface, so that the welding tip can be more easily rotated when the welding tip is in the fixed state. Therefore, the welding tip can be rotated more easily.

Because the welding torch according to the present invention includes the shield member, foreign matters such as spatter are prevented from entering a gap between the tip connection body and the holding member. As a result, the life of the welding torch can be increased.

With the welding torch according to the present invention, the welding tip can be stably fixed in place in the axial direction of the welding tip because a plurality of fixing members fix the welding tip in place.

With the welding tip according to the present invention, the welding tip can be easily attached to and removed from the welding torch.

The welding robot according to the present invention has advantages the same as those of the welding torch, such as the simplified operation of attaching and removing the welding tip, automation of attaching and removing the welding tip, solution to the problem of "tip fusion", and long life of the welding tip and the welding torch.

### BRIEF DESCRIPTION OF THE DRAWINGS

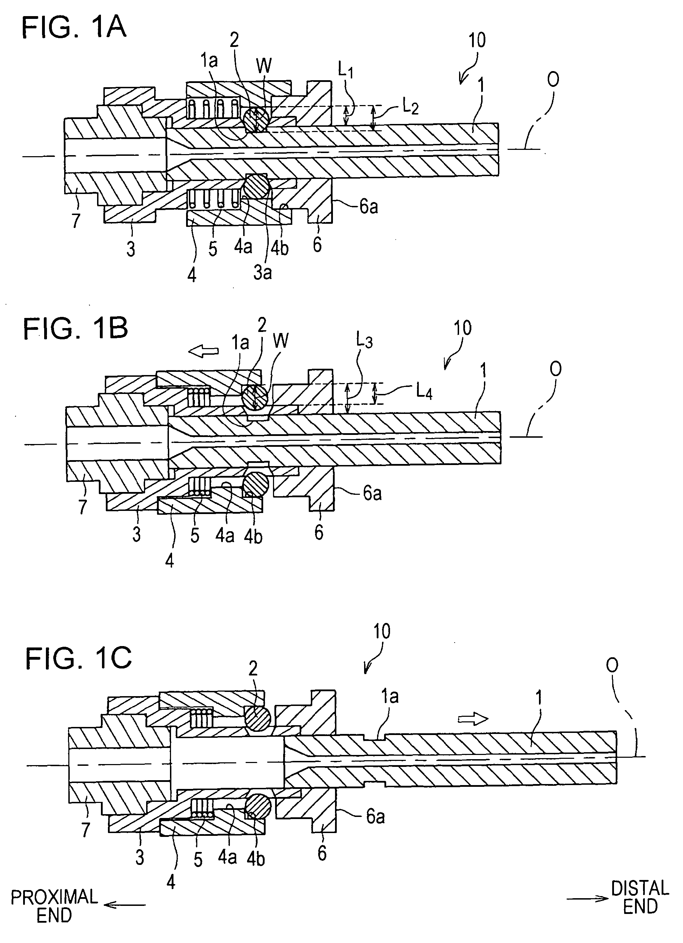

Figs. 1A to 1C are sectional views of a welding torch according to an embodiment of the present invention, Fig. 1A illustrating a state in which a holding member is displaced toward the distal end, Fig. 1B illustrating a state in which the holding member is displaced toward the proximal end, Fig. 1C illustrating a state in which a welding tip is removed toward the distal end;

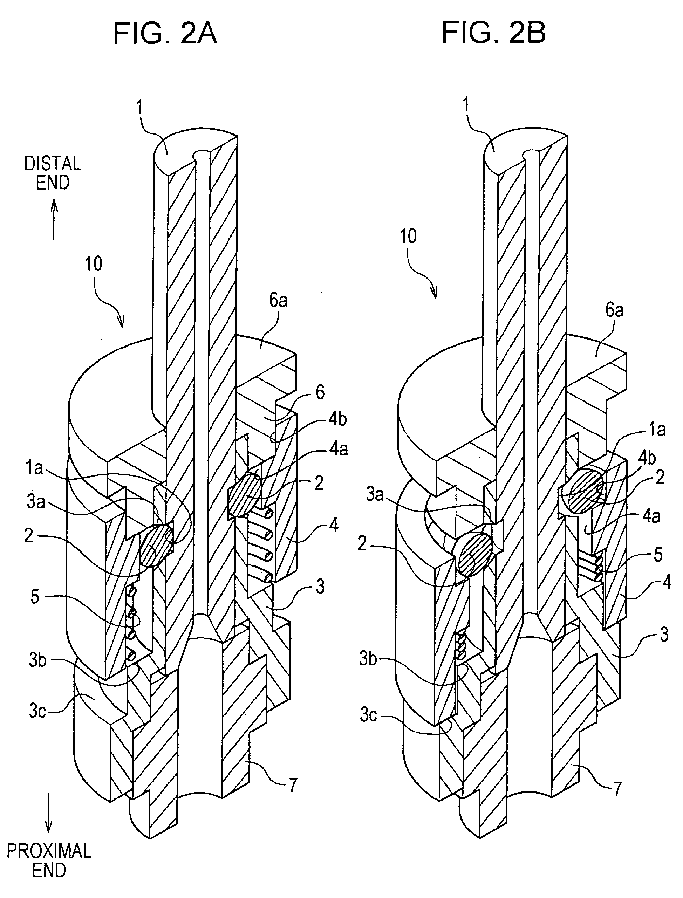

Figs. 2A and 2B are sectional perspective views of the welding torch according to the embodiment of the present invention, Fig. 2A illustrating a state in which the holding member is displaced toward the distal end, Fig. 2B illustrating a state in which the holding member is displaced toward the proximal end;

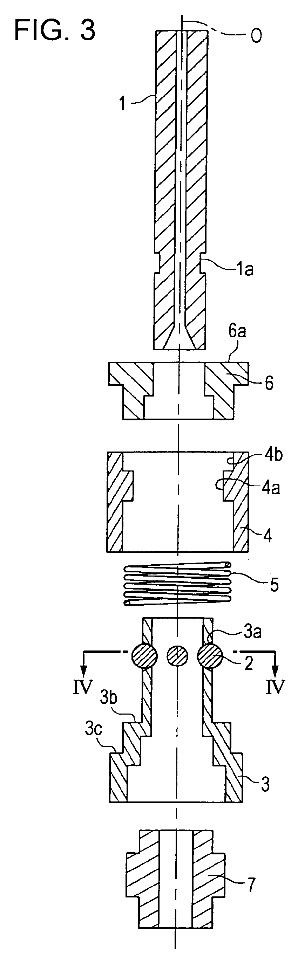

Fig. 3 is a sectional view illustrating the order of assembling the components of the welding torch according to the embodiment of the present invention;

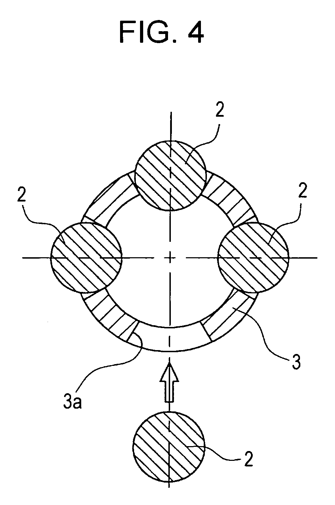

Fig. 4 is a sectional view of a tip connection body and fixing members taken along line IV-IV of Fig. 3;

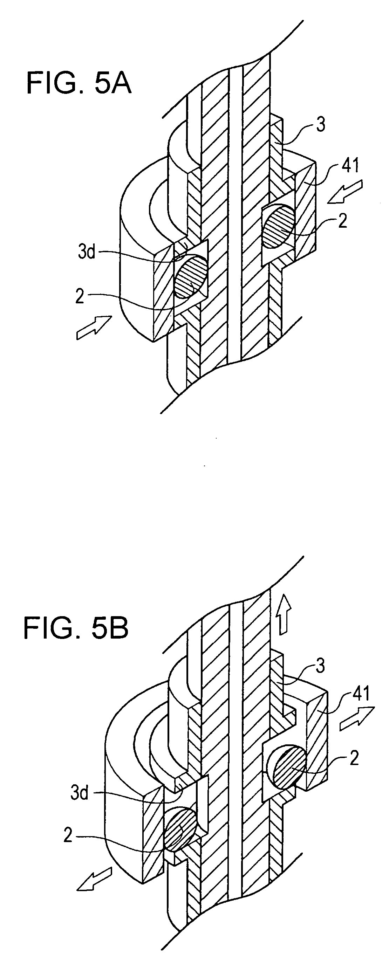

Figs. 5A and 5B are sectional perspective views of a modification of the holding member of the welding torch according to the embodiment of the present invention, Fig. 5A illustrating a state in which the diameter of the holding member is reduced, Fig. 5B illustrating a state in which the diameter of the holding member is not reduced;

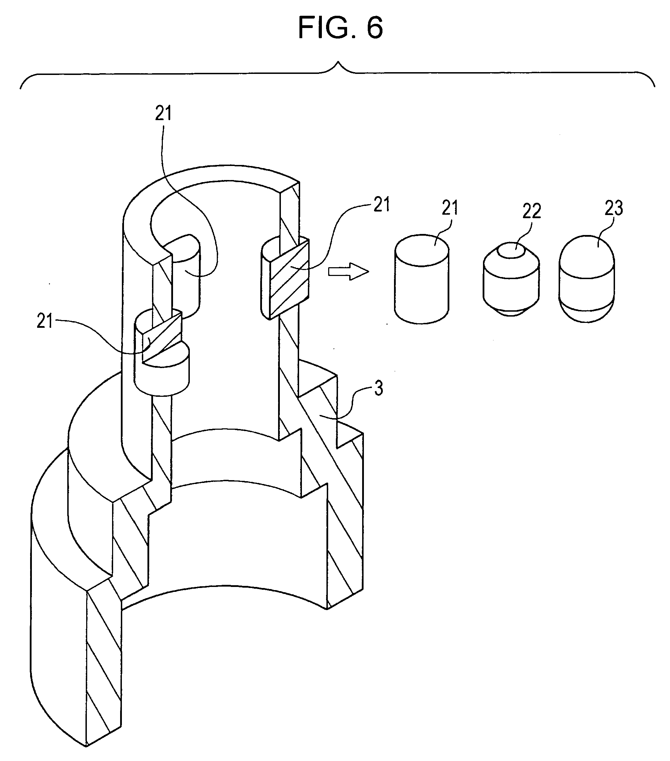

Fig. 6 is a sectional perspective view of modifications of the fixing members of the welding torch according to the embodiment of the present invention;

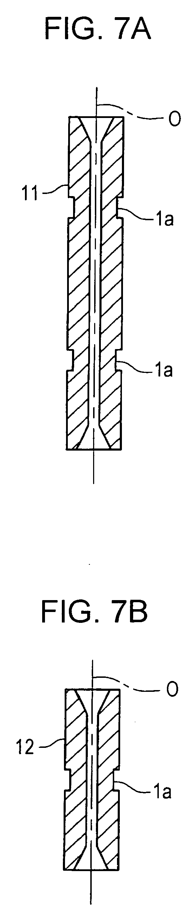

Figs. 7A and 7B are sectional views of modifications of a welding tip according to an embodiment of the present invention, Fig. 7A illustrating a welding tip having two fixing grooves, Fig. 7B illustrating a welding tip having a fixing groove located in the middle of the welding tip in the direction of the central axis O;

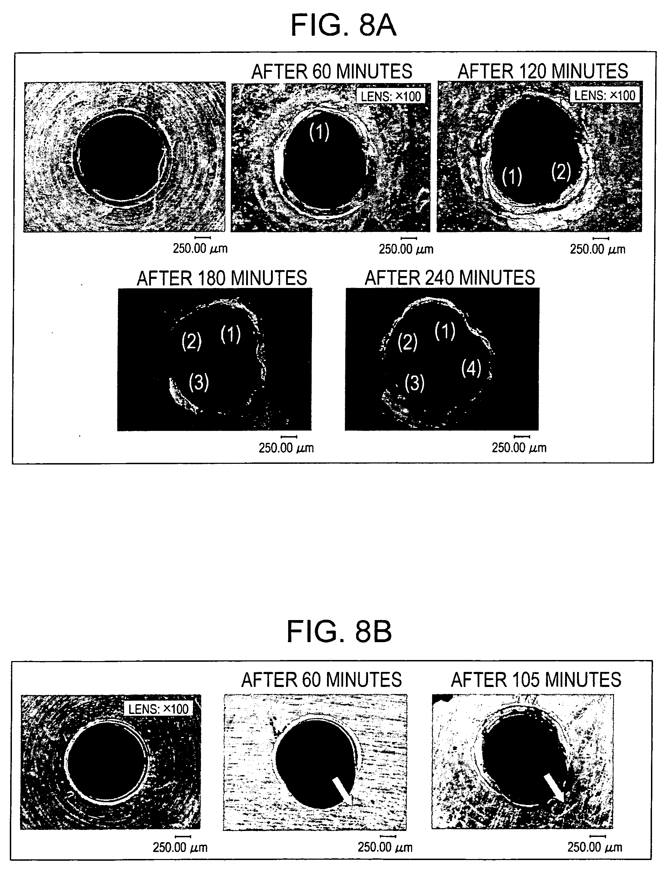

Figs. 8A and 8B are images of the distal end of welding tips used in examples after a predetermined time has passed from the time when welding was started, Fig. 8A showing images of the welding tip according to an example, Fig. 8B showing images of a welding tip according to a comparative example; and

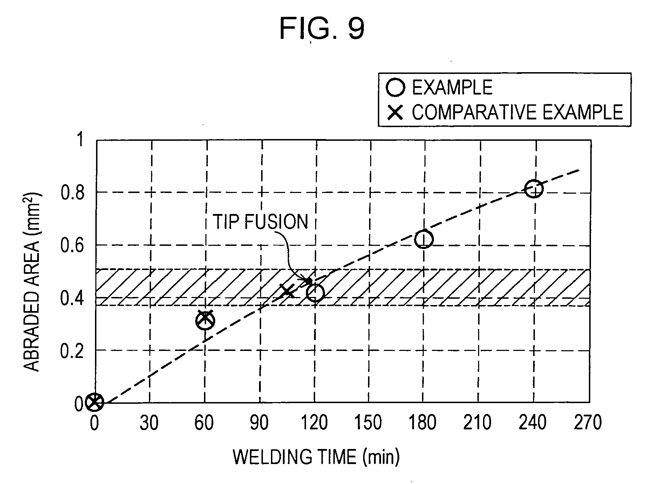

Fig. 9 is a graph illustrating the relationship between the welding time and the abraded area when welding was performed by using welding torches according to the example and the comparative example.

### DESCRIPTION OF THE PREFERRED EMBODIMENTS

Hereinafter, embodiments of the present invention will be described with reference to the drawings.

The terms "distal end" and "proximal end" are used with reference to the directions shown in Figs. 1A to 2B. Overall Structure of Welding Torch

A welding torch 10 is connected to a wire feed unit (not shown) at the proximal end thereof. The welding torch 10 continuously feeds a welding wire from the distal end of a welding tip 1 to a welding position, which is a position on a surface of a base material at which an arc is generated.

As illustrated in Fig. 1A, the welding torch 10 has a structure that is substantially symmetric about the central axis O (hereinafter referred to as "O-axis"). The welding torch 10 includes a tip connection body 3, a holding member 4 that is disposed around the outer periphery of the tip connection body 3, an elastic member 5 that supports the holding member 4, the welding tip 1 disposed inside the tip connection body 3, and fixing members 2 that removably support the welding tip 1. It is preferable that the welding torch 10 further include a shield member 6 mounted on the outer peripheral surface of a distal end portion of the tip connection body 3.

The components of the welding torch 10 may be made of materials having high conductivity so that a welding electric current can pass therethrough. Examples of such materials include copper, a copper alloy such as brass, silver, and a silver alloy.

### Structures of Components

Referring to Figs. 1A to 2B, the components of the welding torch 10 will be described.

### Welding Tip

The welding tip 1 supplies electric power to a welding wire (not shown) that passes through the welding tip 1 and appropriately guides the welding wire to a position at which an arc is generated.

The welding tip 1 has a cylindrical shape so that a linear welding wire (not shown) can pass therethrough. A fixing groove 1a is formed in the outer peripheral surface of the welding tip 1 along the circumferential direction. The fixing groove 1a is formed at a position that is located opposite fixing holes 3a when the welding tip 1 is fitted into the tip connection body 3 (as illustrated in Fig. 1A), i.e., a position located inward of the fixing holes 3a in a direction perpendicular to the O-axis.

The shape of the outer peripheral surface of the welding tip 1 is not particularly limited, except that the fixing groove 1a is formed therein. The shape may be a cylindrical shape as illustrated in Fig. 2A, or may be a bullet-like shape that is tapered toward the distal end. The size and length of the entirety of the fixing groove 1a are not particularly limited.

### Tip Connection Body

The tip connection body 3 is connected directly or via a connection member 7 to a wire feed unit (not shown) at a proximal end portion thereof. The welding tip 1 is removably connected to the tip connection body 3 from the distal end side of the tip connection body 3. Thus, the tip connection body 3 removably connects the welding tip 1 to the wire feed unit.

The tip connection body 3 has a cylindrical shape so that the welding tip 1 can be fitted thereinto. The fixing holes 3a, into which the fixing members 2 can be fitted, are formed in the side surface of the tip connection body 3. The outer peripheral surface of the tip connection body 3 is formed in such a way that the outer diameter of the tip connection body 3 increases stepwise toward the proximal end. The tip connection body 3 includes a first step portion 3b that is in contact with a proximal end portion of the elastic member 5 and a second step portion 3c that is in contact with a proximal end portion of the holding member 4 (see Figs. 2A and 2B).

Four fixing holes 3a are formed at a constant pitch along the circumferential direction (see Fig. 4). With such a structure, the tip connection body 3 can hold the welding tip 1 from four directions and stably fix the welding tip 1 in place in the O-axis direction.

The fixing holes 3a each have a tapered shape so that the fixing members 2 may not drop into the tip connection body 3. To be specific, the diameter of each of the fixing holes 3a decreases inward in a direction perpendicular to the O-axis. The diameter of the fixing hole 3a at the inner peripheral surface of the tip connection body 3 is smaller than the width of the fixing member 2 (see Fig. 4).

The tip connection body 3 is connected to the connection member 7 at the proximal end thereof. The connection member 7 has an inner diameter smaller than that of the tip connection body 3. Therefore, when the welding tip 1 is inserted into the tip connection body 3 (as illustrated in Fig. 1A), the proximal end of the welding tip 1 in contact with the distal end of the connection member 7, and thereby the position of the welding tip 1 in the O-axis direction can be determined.

The tip connection body 3 and the connection member 7, which are independent members in Figs. 1A to 2B, may be integrally formed.

### Fixing Member

The fixing members 2 fix the welding tip 1 in place in the O-axis direction relative to the tip connection body 3. The fixing members 2 have a spherical shape. Because the fixing members 2 have a spherical shape, the fixing members 2 can rotate and contact the fixing groove 1a of the welding tip 1 at a point rather than along a line, and thereby the welding tip 1 can be fixed in place in such a way that the welding tip 1 can be easily rotated around the O-axis direction.

The width W of each of the fixing members 2 in the radial direction of the tip connection body 3 is larger than a distance L₁ between the inner peripheral surface of a smaller diameter portion 4a of the holding member 4 and the outer peripheral surface of the welding tip 1, i.e., W > L₁. With such a structure, when one end of the fixing member 2 is in contact with the inner peripheral surface of the smaller diameter portion 4a of the holding member 4 (as illustrated in Figs. 1A and 2A), the other end of the fixing member 2 passes through the fixing hole 3a in the tip connection body 3 and is fitted into the fixing groove 1a of the welding tip 1. As a result, the welding tip 1 is fixed in place in the O-axis direction relative to the tip connection body 3.

The width W of each of the fixing members 2 in the radial direction of the tip connection body 3 is smaller than a distance L₂ between the inner peripheral surface of the smaller diameter portion 4a of the holding member 4 and the bottom surface of the fixing groove 1a, or to be more precise, W ≤ L₂. With such a structure, when one end of the fixing member 2 is in contact with the inner peripheral surface of the smaller diameter portion 4a of the holding member 4 (as illustrated in Figs. 1A and 2A), the other end of the fixing member 2 is fitted into the fixing groove 1a of the welding tip 1 without applying a pressure to the bottom surface of the fixing groove 1a. As a result, the welding tip 1 is fixed in place in the O-axis direction and is rotatable around the O-axis direction.

The width W of each of the fixing members 2 in the radial direction of the tip connection body 3 is smaller than a distance L₃ between the inner peripheral surface of a larger diameter portion 4b of the holding member 4 and the outer peripheral surface of the welding tip 1, or to be more precise, W ≤ L₃. With such a structure, when one end of the fixing member 2 is in contact with the inner peripheral surface of the larger diameter portion 4b of the holding member 4 (as illustrated in Figs. 1B and 2B), the other end of the fixing member 2 is not fitted into the fixing groove 1a of the welding tip 1. As a result, the welding tip 1 can be removed from the tip connection body 3 in the O-axis direction (as illustrated in Fig. 1C).

The width W of each of the fixing members 2 in the radial direction of the tip connection body 3 is larger than a distance L₄ between the inner peripheral surface of the larger diameter portion 4b of the holding member 4 and the outer peripheral surface of the tip connection body 3, i.e., W > L₄. With such a structure, when one end of the fixing member 2 is in contact with the inner peripheral surface of the larger diameter portion 4b of the holding member 4 (as illustrated in Figs. 1B and 2B), the other end of the fixing member 2 is fitted into the fixing groove 1a of the welding tip 1. As a result, the fixing member 2 is held in the O-axis direction by the fixing hole 3a of the tip connection body 3, so that the fixing member 2 is prevented from being moved in the O-axis direction.

The fixing members 2 are disposed at positions that are located opposite the fixing holes 3a of the tip connection body 3, i.e., at positions located outward of the fixing holes 3a in directions perpendicular to the O-axis.

### Holding Member

The holding member 4 holds each the fixing members 2 in a direction perpendicular to the O-axis.

The holding member 4 has a cylindrical shape so that the tip connection body 3 can be fitted into the holding member 4. The holding member 4 includes the larger diameter portion 4b that is located near the distal end thereof and the smaller diameter portion 4a that is located between the larger diameter portion 4b and the proximal end thereof.

The smaller diameter portion 4a and the larger diameter portion 4b of the holding member 4 are formed in such a way that one end of each of the fixing members 2 is in contact with the inner peripheral surface of the smaller diameter portion 4a when the holding member 4 is displaced toward the distal end (as illustrated Figs. 1A and 2A) and that one end of each of the fixing members 2 is in contact with the inner peripheral surface of the larger diameter portion 4b when the holding member 4 is displaced toward the proximal end (as illustrated in Figs. 1B and 2B).

When the holding member 4 is displaced toward the proximal end (as illustrated in Figs. 1B and 2B), the proximal end of the holding member 4 is in contact with the second step portion 3c of the tip connection body 3 (see Fig. 2B), and thereby the limit of displacement of the holding member 4 toward the proximal end is determined.

When the holding member 4 is displaced toward the distal end (as illustrated in Figs. 1A and 2A), the smaller diameter portion 4a of the holding member 4 is in contact with the shield member 6, and thereby the limit of displacement of the holding member 4 toward the distal end is determined.

### Elastic Member

The elastic member 5 supports the holding member 4 in such a way that the holding member 4 is displaceable in the O-axis direction relative to the tip connection body 3. A spring is used as the elastic member 5.

The elastic member 5 is disposed between the tip connection body 3 and the holding member 4. One end of the elastic member 5 is in contact with the smaller diameter portion 4a of the holding member 4, and the other end of the elastic member 5 is in contact with the first step portion 3b of the tip connection body 3 (see Figs. 2A and 2B).

When the elastic member 5 is stretched (as illustrated in Figs. 1A and 2A), one end of each of the fixing members 2 is in contact with the inner peripheral surface of the smaller diameter portion 4a of the holding member 4. When the elastic member 5 is contracted (as illustrated in Figs. 1B and 2B), one end of each of the fixing members 2 is in contact with the inner peripheral surface of the larger diameter portion 4b of the holding member 4.

### Shield Member

The shield member 6 prevents foreign matters such as spatter from entering a gap between the tip connection body 3 and the holding member 4.

The shield member 6 has an annular shape and extends beyond the inner peripheral surface of the larger diameter portion 4b of the holding member 4 in a direction perpendicular to the O-axis. The shield member 6 is mounted on the outer peripheral surface of the distal end portion of the tip connection body 3.

A distal end surface 6a of the shield member 6 prevents foreign matters such as spatter from entering a gap between the tip connection body 3 and the holding member 4.

### Method of Attaching and Removing Welding Tip

Referring to Figs. 1A to 1C, a method of attaching/removing the welding tip 1 to/from the tip connection body 3 will be described.

To attach the welding tip 1 to the tip connection body 3, the holding member 4 is first displaced toward the proximal end. As a result, the fixing members 2 are moved outward in directions perpendicular to the O-axis. When one end of each of the fixing members 2 contacts the inner peripheral surface of the larger diameter portion 4b of the holding member 4, the other end of each of the fixing members 2 does not protrude inward beyond the inner peripheral surface of the tip connection body 3. In this state, the welding tip 1 may be fitted into the tip connection body 3 from the distal end side of the tip connection body 3.

Then, by displacing the holding member 4 toward the distal end, one end of each of the fixing members 2 contacts the inner peripheral surface of the smaller diameter portion 4a of the holding member 4, and the other end of each of the fixing members 2 passes through the fixing hole 3a in the tip connection body 3 and is fit into the fixing groove 1a in the welding tip 1. Thus, the welding tip 1 can be fixed in place in the O-axis direction relative to the tip connection body 3.

To remove the welding tip 1, the holding member 4 is displaced toward the proximal end. As a result, the fixing members 2 become movable outward in directions perpendicular to the O-axis. In this state, the welding tip 1 may be moved toward the distal end and removed from the tip connection body 3.

### Process of Assembling Welding Torch

Referring to Fig. 3, a process of assembling the welding torch 10 will be described.

First, a proximal end portion of the tip connection body 3 is connected to a distal end portion of the connection member 7. A method of making this connection is not particularly limited, and the connection may be made by using a screw or by press fitting. Alternatively, as described above, the tip connection body 3 and the connection member 7 may be integrally formed.

Then, the fixing members 2 are mounted in the fixing holes 3a in the tip connection body 3, and the elastic member 5 is mounted on the tip connection body 3 so that the elastic member 5 contacts the first step portion 3b of the tip connection body 3. Subsequently, the holding member 4 is fitted onto the tip connection body 3 from the distal end side of the tip connection body 3. The shield member 6 is connected to the distal end portion of the tip connection body 3 from the distal end side of the tip connection body 3. A method of making this connection is not particularly limited, and the connection may be made by using a screw or by press fitting.

Lastly, the welding tip 1 is fitted into the tip connection body 3 from the distal end side of the tip connection body 3.

A proximal end portion of the welding torch 10 is connected to the wire feed unit (not shown), and then the welding torch 10 is used. A method of making this connection is not particularly limited, and the connection may be made by using a screw or by press fitting.

### Welding Robot

The welding torch 10 according to the present invention can be applied to a welding robot. For example, a welding robot includes a manipulator, such as an arm having a plurality of joints; a wire feed unit; a power source; and the welding torch 10. A proximal end portion of the welding torch 10 is connected to the wire feed unit, and the welding torch 10 is attached to the distal end of the arm. The welding robot may have a plurality of arms, and the welding torch 10 may be attached to the distal end of each of the arms.

The welding robot may have a structure such that the welding position, the output power of the power source, the feed rate of welding wire (m/min), and the like are controlled by a predetermined system.

The present invention is not limited to the embodiments described above, and can be modified within the sprit and scope of the invention as follows.

In the description above, the number of the fixing holes 3a in the tip connection body 3 is four. However, the number of the fixing holes 3a is not particularly limited, and it is preferable that a plurality of the fixing holes 3a be formed along the circumferential direction. When the tip connection body 3 has such a structure, the welding tip 1 can be supported from a plurality of directions and can be stably fixed in place in the O-axis direction.

In the description above, each of the fixing members 2 has a spherical shape. However, the shape of the fixing member 2 is not limited to a spherical shape, and a contact surface of the fixing member 2 that contacts the fixing groove may be a curved surface different from a spherical surface. For example, Fig. 6 illustrates fixing members 21 that have a cylindrical shape, a fixing member 22 that has a cylindrical shape with tapered ends, and a fixing member 23 that has a cylindrical shape with semispherical ends. When the fixing member 2 has such a shape, the fixing member 2 can rotate around an axis that is parallel to the O-axis, so that the welding tip 1 is rotatable around the O-axis direction even when the welding tip 1 is fixed in place in the O-axis direction (as illustrated in Figs. 1A and 2A).

The holding member 4 may be a holding member 41 that has a variable inner diameter as illustrated in Figs. 5A and 5B. For example, the holding member 41 may be split at a circumferential part so that the holding member 41 may have a C-shaped section taken in a direction perpendicular to the O-axis. In this case, the inner diameter of the holding member 41 can be reduced by clamping the holding member 41 with a clamp or the like.

In the description above, a spring is used as the elastic member 5. However, the elastic member 5 is not particularly limited, as long as the elastic member 5 can stretch and contract in the O-axis direction.

As illustrated in Fig. 7A, the welding tip 1 may be a welding tip 11 that has two fixing grooves 1a. To be specific, one of the fixing grooves 1a is formed at a position that is located opposite the fixing holes 3a in the tip connection body 3 when one end of the welding tip 11 is inserted into the tip connection body 3, and the other fixing groove 1a is formed at a position that is located opposite the fixing holes 3a in the tip connection body 3 when the other end of the welding tip 11 is inserted into the tip connection body 3.

When the welding tip 11 has two fixing grooves 1a formed in the outer peripheral surface thereof, if one of distal end portions of the welding tip 11 that guides the welding wire to a position at which an arc is generated becomes abraded, the welding wire can be supported by the other distal end portion by connecting the welding tip 11 in the opposite direction. That is, an economic advantage is obtained in that one welding tip 11 can be used for a time twice that of existing welding tips.

In existing mechanisms in which the welding tip is connected to the tip connection body with a screw, even if external threads are formed at both ends of the welding tip, spatter may adhere to one of the external threads that is located near a position at which an arc is generated during welding. As a result, when a user tries to connect the welding tip in the opposite direction, the welding tip may not be connected to an internally threaded portion of the tip connection body due to the spatter that has adhered to the external thread. Therefore, it is impossible to use both ends of the welding tip with existing thread mechanisms.

As illustrated in Fig. 7B, the welding tip 1 may be a welding tip 12 that has the fixing groove 1a formed in the middle thereof in the O-axis direction. To be specific, the fixing groove 1a is formed at a position that is located opposite the fixing holes 3a in the tip connection body 3 regardless of which distal end of the welding tip 12 is inserted into the tip connection body 3.

With such a structure, the welding tip 12 has an advantage of long life as with the welding tip 11 that has two fixing grooves 1a.

### EXAMPLES

Comparison between a result of welding performed by using a welding torch having the structure according to the present invention (hereinafter referred to as "example") and a result of welding performed by using an exiting welding torch that do not have the structure according to the present invention (hereinafter referred to as "comparative example") will be described.

### Welding Torch

As illustrated in Figs. 1A to 1C, a welding torch according to the example includes a welding tip having a fixing groove, a tip connection body having a fixing hole, a holding member including a smaller diameter portion and a larger diameter portion, an elastic member, spherical fixing members, an annular shield member, and a connection member.

A welding torch according to the comparative example, which is an existing welding torch, includes a welding tip having an external thread on an outer peripheral surface of a proximal end portion, and a tip connection body having an internal thread on the inner peripheral surface of a distal end portion. The welding torch and the tip connection body are connected to each other with the screw mechanism.

### Welding Condition

A welding wire that complies with JIS Z 3312 YGW16 (corresponding to AWS A5.18 ER70S-G) was used. A base material to be welded was a structural steel (JIS SS400). A welding method used was pulse MAG welding (average welding electric current and voltage: 250A and 29V, composition of shield gas: 80% Ar and 20% CO₂). Extension length of the welding wire was 25 mm.

### Abrasion Test

An abrasion test was performed as follows: continuous welding was performed on a plate-shaped base material (thickness 20 mm x length 600 mm x width 600 mm), and the state of the distal end of welding tip was checked and the abraded area was measured every hour. The abraded area was measured by using an image of a surface of the distal end of the welding tip taken through an optical microscope.

In the welding torch according to the example, the welding tip can be rotated around the axis of the welding tip even when the welding tip is fixed in place. Therefore, the welding torch was used while rotating the welding tip by a predetermined angle (about 45°) every hour.

### Test Result

In general, when welding is performed under the welding condition described above, tip fusion between a welding tip and a welding wire occurs in about two hours. If the abraded area reaches the shaded region in Fig. 9, displacement of a welding position or poor electrical connection to the welding wire occurs.

When the welding torch according to the comparative example was used, poor electrical connection to the welding wire occurred 105 minutes after welding was started (see Fig. 8B), and tip fusion occurred 120 minutes after welding was started (see Fig. 9).

In contrast, when the welding torch according to the example was used, a position at which abrasion between the welding tip and the welding wire occurred could be changed every hour (from (1) to (4) in Fig. 8A) because the welding tip was rotated by a predetermined angle every hour. As a result, occurrence of tip fusion at each position was avoided before the lapse of two hours, when tip fusion usually occurs, so that tip fusion did not occur even 240 minutes after welding was started.

Because the welding tip was rotated by a predetermine angle every hour, abrasion did not occur at one position but occurred at four positions. As a result, the abraded area at each position was small, so that displacement of the welding position and poor connection to welding wire did not occur even 240 minutes after welding was started.

In conclusion, it was proved that the welding torch according to the present invention, which allows the welding tip to be rotated around the axial direction of the welding tip even when the welding tip is fixed in place, can delay the time when displacement of the welding position or poor connection to the welding wire occurs and can increase the life of the welding tip considerably as compared with existing welding torches.

## Claims

1. A welding torch comprising:
a tip connection body (3) that has a cylindrical shape and that has a fixing hole (3a) extending through a side surface thereof;
a holding member (4) that has a cylindrical shape and that is fitted onto an outside of the tip connection body (3), the holding member (4) having a smaller diameter portion (4a) and a larger diameter portion (4b) formed on an inner peripheral surface thereof;
a fixing member (2) disposed between the inner peripheral surface of the holding member (4) and the fixing hole (3a) of the tip connection body (3), the fixing member (2) being fixed in place in an axial direction of the tip connection body (3); and
a welding tip (1) that has a cylindrical shape and that is fitted into the tip connection body (3), the welding tip (1) having a fixing groove (1a) formed along a circumferential direction of an outer peripheral surface thereof at a position that is opposite the fixing hole (3a), **characterized in that**:
the holding member (4) is displaceable in the axial direction of the tip connection body (3), and
the fixing member (2) fixes the welding tip (1) in place in the axial direction of the welding tip (1) when the fixing member (2) is in contact with the smaller diameter portion (4a), and the fixing member (2) releases the welding tip (1) when the fixing member (2) is in contact with the larger diameter portion (4b).

2. The welding torch according to Claim 1, further comprising:
an elastic member (5) disposed between the holding member (4) and the tip connection body (3), one end of the elastic member (5) being in contact with the smaller diameter portion (4a) and the other end of the elastic member (5) being in contact with the tip connection body (3),
wherein a width of the fixing member (2) in a radial direction of the tip connection body (3) is larger than a distance between an inner peripheral surface of the smaller diameter portion (4a) and an outer peripheral surface of the welding tip (1) and is smaller than a distance between an inner peripheral surface of the larger diameter portion (4b) and the outer peripheral surface of the welding tip (1).

3. The welding torch according to Claim 2,
wherein the width of the fixing member (2) in the radial direction of the tip connection body (3) is smaller than a distance between the inner peripheral surface of the smaller diameter portion (4a) and a bottom surface of the fixing groove (1 a), and
wherein the welding tip (1) is rotatable around the axial direction thereof.

4. The welding torch according to any of Claims 1 to 3 wherein a contact surface of the fixing member (2) that contacts the fixing groove (1a) is a curved surface.

5. The welding torch according to any of Claims 1 to 4, further comprising:
a shield member (6) that has an annular shape and that is mounted on an outer peripheral surface of a distal end portion of the tip connection body (3), the shield member (6) extending beyond the inner peripheral surface of the larger diameter portion of the holding member (4) in a radial direction of the tip connection body (3).

6. The welding torch according to any of Claims 1 to 5,
wherein a plurality of the fixing holes (3a) are formed in the side surface of the tip connection body (3) along the circumferential direction, and
wherein the fixing member (2) is disposed at each of positions that are opposite the fixing holes (3a).

7. A welding torch comprising:
a tip connection body (3) that has a cylindrical shape and that has a fixing hole (3a) extending through a side surface thereof;
a holding member (4) that has a cylindrical shape and that is fitted onto an outside of the tip connection body (3), the holding member (4) having an inner peripheral surface having a variable diameter;
a fixing member (2) disposed between the inner peripheral surface of the holding member (4) and the fixing hole (3a) of the tip connection body (3), the fixing member (2) being fixed in place in an axial direction of the tip connection body (3); and
a welding tip (1) that has a cylindrical shape and that is fitted into the tip connection body (3), the welding tip (1) having a fixing groove (1a) formed along a circumferential direction of an outer peripheral surface thereof at a position that is opposite the fixing hole (3a), **characterized in that**:
the holding member (4) is displaceable in the axial direction of the tip connection body (3), and
the fixing member (2) fixes the welding tip (1) in place in the axial direction of the welding tip (1) when the fixing member (2) is in contact with the inner surface of the holding member (4) in a reduced diameter state, and the fixing member (2) releases the welding tip (1) when the holding member (4) has an increased diameter.

8. The welding torch according to any one of Claims 1 to 7,
wherein the welding tip (1) has a cylindrical shape and has at least two fixing grooves (1a) formed along the circumferential direction of the outer peripheral surface thereof.

9. A welding robot comprising:
the welding torch according to any one of Claims 1 to 8.

## Patentansprüche

1. Schweißbrenner, der umfasst:
einen Spitzenverbindungskörper (3), der eine zylindrische Form hat und der ein Befestigungsloch (3a) hat, das sich durch eine seiner Seitenflächen erstreckt;
ein Halteelement (4), das eine zylindrische Form hat und das auf eine Außenseite des Spitzenverbindungskörpers (3) gepasst ist, wobei das Halteelement (4) mit einem kleineren Durchmesserabschnitt (4a) und einem größeren Durchmesserabschnitt (4b) auf seiner Innenumfangsfläche ausgebildet ist;
ein Befestigungselement (2), das zwischen der Innenumfangsfläche des Halteelements (4) und dem Befestigungsloch (3a) des Spitzenverbindungskörpers (3) angeordnet ist, wobei das Befestigungselement (2) in einer Axialrichtung des Spitzenverbindungskörpers (3) an seinem Platz befestigt ist; und
eine Schweißspitze (1), die eine zylindrische Form hat und die in den Spitzenverbindungskörper (3) gepasst ist, wobei die Schweißspitze (1) eine Befestigungsnut (1a) entlang einer Umfangsrichtung ihrer Außenumfangsfläche an einer Position ausgebildet hat, die entgegengesetzt zu dem Befestigungsloch (3a) ist, **dadurch gekennzeichnet, dass**:
das Halteelement (4) in der Axialrichtung des Spitzenverbindungskörpers (3) verschiebbar ist, und
das Befestigungselement (2) die Schweißspitze (1) an ihrem Platz in der Axialrichtung der Schweißspitze (1) befestigt, wenn das Befestigungselement (2) in Kontakt mit dem kleineren Durchmesserabschnitt (4a) ist, und das Befestigungselement (2) die Schweißspitze (1) löst, wenn das Befestigungselement (2) in Kontakt mit dem größeren Umfangsabschnitt (4b) ist.

2. Schweißbrenner nach Anspruch 1, der ferner umfasst:
ein elastisches Element (5), das zwischen dem Halteelement (4) und dem Spitzenverbindungsabschnitt (3) angeordnet ist, wobei ein Ende des elastischen Elements (5) in Kontakt mit dem kleineren Durchmesserabschnitt (4a) ist und das andere Ende des elastischen Elements (5) in Kontakt mit dem Spitzenverbindungskörper (3) ist,
wobei eine Breite des Befestigungselements (2) in einer Radialrichtung des Spitzenverbindungskörpers (3) größer als ein Abstand zwischen einer Innenumfangsfläche des kleineren Durchmesserabschnitts (4a) und einer Außenumfangsfläche der Schweißspitze (1) ist und kleiner als ein Abstand zwischen einer Innenumfangsfläche des größeren Durchmesserabschnitts (4b) und der Außenfläche der Schweißspitze (1) ist.

3. Schweißbrenner nach Anspruch 2,
wobei die Breite des Befestigungselements (2) in der Radialrichtung des Spitzenverbindungskörpers (3) kleiner als ein Abstand zwischen der Innenumfangsfläche des kleineren Durchmesserabschnitts (4a) und einer Bodenfläche der Befestigungsnut (1a) ist, und
wobei die Schweißspitze (1) um ihre Axialrichtung drehbar ist.

4. Schweißbrenner nach einem der Ansprüche 1 bis 3, wobei eine Kontaktfläche des Befestigungselements (2), die die Befestigungsnut (1a) kontaktiert, eine gekrümmte Fläche ist.

5. Schweißbrenner nach einem der Ansprüche 1 bis 4, die ferner umfasst:
ein Abschirmelement (6), das eine ringförmige Form hat und das auf eine Außenumfangsfläche eines distalen Endabschnitts des Spitzenverbindungskörpers (3) montiert ist, wobei das Abschirmelement (6) sich in einer Radialrichtung des Spitzenverbindungskörpers (3) über die Innenumfangsfläche des größeren Durchmesserabschnitts des Halteelements (4) hinaus erstreckt.

6. Schweißbrenner nach einem der Ansprüche 1 bis 5,
wobei eine Vielzahl der Befestigungslöcher (3a) entlang der Umfangsrichtung in der Seitenfläche des Spitzenverbindungskörpers (3) ausgebildet sind, und
wobei das Befestigungselement (2) an jeder der Positionen angeordnet ist, die entgegengesetzt zu den Befestigungslöchern (3a) sind.

7. Schweißbrenner, der umfasst:
einen Spitzenverbindungskörper (3), der eine zylindrische Form hat und der ein Befestigungsloch (3a) hat, das sich durch eine seiner Seitenflächen erstreckt;
ein Halteelement (4), das eine zylindrische Form hat und das auf eine Außenseite des Spitzenverbindungskörpers (3) gepasst ist, wobei das Halteelement (4) eine Innenumfangsfläche mit einem variablen Durchmesser hat;
ein Befestigungselement (2), das zwischen der Innenumfangsfläche des Halteelements (4) und dem Befestigungsloch (3a) des Spitzenverbindungskörpers (3) angeordnet ist, wobei das Befestigungselement (2) in einer Axialrichtung des Spitzenverbindungskörpers (3) an seinem Platz befestigt ist; und
eine Schweißspitze (1), die eine zylindrische Form hat und die in den Spitzenverbindungskörper (3) gepasst ist, wobei die Schweißspitze (1) eine Befestigungsnut (1a) entlang einer Umfangsrichtung ihrer Außenumfangsfläche an einer Position ausgebildet hat, die entgegengesetzt zu dem Befestigungsloch (3a) ist, **dadurch gekennzeichnet, dass**:
das Halteelement (4) in der Axialrichtung des Spitzenverbindungskörpers (3) verschiebbar ist, und
das Befestigungselement (2) die Schweißspitze (1) an ihrem Platz in der Axialrichtung der Schweißspitze (1) befestigt, wenn das Befestigungselement (2) in Kontakt mit der Innenfläche des Halteelements (4) in einem Zustand mit verringertem Durchmesser ist, und das Befestigungselement (2) die Schweißspitze (1) löst, wenn das Haltelement (4) einen vergrößerten Durchmesser ausgebildet hat.

8. Schweißbrenner nach einem der Ansprüche 1 bis 7,
wobei die Schweißspitze (1) eine zylindrische Form hat und wenigstens zwei Befestigungsnuten (1a) - entlang der Umfangsrichtung ihrer Außenumfangsfläche hat.

9. Schweißroboter, der umfasst:
den Schweißbrenner nach einem der Ansprüche 1 bis 8.

## Revendications

1. Chalumeau de soudage comprenant :
un corps de connexion d'embout (3) qui présente une forme cylindrique et comporte un trou de fixation (3a) qui s'étend à travers une surface latérale correspondante ;
un élément de maintien (4) qui présente une forme cylindrique et est monté sur l'extérieur du corps de connexion d'embout (3), l'élément de maintien (4) comportant une portion à diamètre plus petit (4a) et une portion à diamètre plus grand (4b) formée sur une surface périphérique interne correspondante ;
un élément de fixation (2) agencé entre la surface périphérique interne de l'élément de maintien (4) et le trou de fixation (3a) du corps de connexion d'embout (3), l'élément de fixation (2) étant maintenu en place en direction axiale du corps de connexion d'embout (3) ; et
un embout de soudage (1) qui présente une forme cylindrique et est monté dans le corps de connexion d'embout (3), l'embout de soudage (1) comportant une rainure de fixation (1a) formée selon une direction circonférentielle d'une surface périphérique externe correspondante à une position opposée au trou de fixation (3a),
**caractérisé en ce que** :
l'élément de maintien (4) peut être déplacé en direction axiale du corps de connexion d'embout (3), et
l'élément de fixation (2) fixe l'embout de soudage (1) en place en direction axiale de l'embout de soudage (1) quand l'élément de fixation (2) est en contact avec la portion à diamètre plus petit (4a), et l'élément de fixation (2) libère l'embout de soudage (1) quand l'élément de fixation (2) est en contact avec la portion à diamètre plus grand (4b).

2. Chalumeau de soudage selon la revendication 1, comprenant en outre :
un élément élastique (5) agencé entre l'élément de maintien (4) et le corps de connexion d'embout (3), une extrémité de l'élément élastique (5) étant en contact avec la portion à diamètre plus petit (4a) et l'autre extrémité de l'élément élastique (5) étant en contact avec le corps de connexion d'embout (3),
dans lequel une largeur de l'élément de fixation (2) en direction radiale du corps de connexion d'embout (3) est supérieure à une distance entre une surface périphérique interne de la portion à diamètre plus petit (4a) et une surface périphérique externe de l'embout de soudage (1), et est inférieure à une distance entre une surface périphérique interne de la portion à diamètre plus grand (4b) et la surface périphérique externe de l'embout de soudage (1).

3. Chalumeau de soudage selon la revendication 2,
dans lequel la largeur de l'élément de fixation (2) en direction radiale du corps de connexion d'embout (3) est inférieure à une distance entre la surface périphérique interne de la portion à diamètre plus petit (4a) et une surface de fond de la rainure de fixation (1a), et
dans lequel l'embout de soudage (1) peut tourner autour de la direction axiale correspondante.

4. Chalumeau de soudage selon l'une quelconque des revendications 1 à 3, dans lequel une surface de contact de l'élément de fixation (2) qui entre en contact avec la rainure de fixation (1a) est une surface courbe.

5. Chalumeau de soudage selon l'une quelconque des revendications 1 à 4, comprenant en outre :
un élément de protection (6) qui présente une forme annulaire et est monté sur une surface périphérique externe d'une portion d'extrémité distale du corps de connexion d'embout (3), l'élément de protection (6) s'étendant au-delà de la surface périphérique interne de la portion à diamètre plus grand de l'élément de maintien (4) en direction radiale du corps de connexion d'embout (3).

6. Chalumeau de soudage selon l'une quelconque des revendications 1 à 5,
dans lequel une pluralité de trous de fixation (3a) est formée dans la surface latérale du corps de connexion d'embout (3) selon la direction circonférentielle, et
dans lequel l'élément de fixation (2) est agencé à chacune des positions opposées aux trous de fixation (3a).

7. Chalumeau de soudage comprenant :
un corps de connexion d'embout (3) qui présente une forme cylindrique et comporte un trou de fixation (3a) qui s'étend à travers une surface latérale correspondante ;
un élément de maintien (4) qui présente une forme cylindrique et est monté sur l'extérieur du corps de connexion d'embout (3), l'élément de maintien (4) présentant une surface périphérique interne de diamètre variable ;
un élément de fixation (2) agencé entre la surface périphérique interne de l'élément de maintien (4) et le trou de fixation (3a) du corps de connexion d'embout (3), l'élément de fixation (2) étant maintenu en place en direction axiale du corps de connexion d'embout (3) ; et
un embout de soudage (1) qui présente une forme cylindrique et est monté dans le corps de connexion d'embout (3), l'embout de soudage (1) comportant une rainure de fixation (1a) formée selon une direction circonférentielle d'une surface périphérique externe correspondante à une position opposée au trou de fixation (3a),
**caractérisé en ce que** :
l'élément de maintien (4) peut être déplacé en direction axiale du corps de connexion d'embout (3), et
l'élément de fixation (2) fixe l'embout de soudage (1) en place en direction axiale de l'embout de soudage (1) quand l'élément de fixation (2) est en contact avec la surface interne de l'élément de maintien (4) dans un état à diamètre réduit, et l'élément de fixation (2) libère l'embout de soudage (1) quand l'élément de maintien (4) présente un diamètre augmenté.

8. Chalumeau de soudage selon l'une quelconque des revendications 1 à 7,
dans lequel l'embout de soudage (1) présente une forme cylindrique et comporte au moins deux rainures de fixation (1a) formées selon la direction circonférentielle de la surface périphérique externe correspondante.

9. Robot de soudage comprenant :
le chalumeau de soudage selon l'une quelconque des revendications 1 à 8.
